# EUROPEAN PATENT APPLICATION

(11) **EP 3 340 266 A1**
(43) Date of publication of application: **27.06.2018**
(21) Application number: 17202418.4
(22) Date of filing: 17.11.2017
(51) Int. Cl.: H01H 19/58, B60Q 1/14

(54) **LEVER DEVICE FOR VEHICLE**

(30) Priority: 21.12.2016 JP 2016247302
(71) Applicant: Valeo Japan Co., Ltd., Saitama 360-0193 (JP)
(72) Inventor: ITOKAWA, Masahiro, Tokyo 143-8521 (JP)
(74) Representative: Oppermann, Frank

(57) **Abstract**

A lever device 1 comprises a movable board 7 which is arranged in the inside of an operating lever 2 provided with a rotary knob 6 a rotational operation of which around an axis line is made possible and which rotates around the axis line in association with the rotational operation of the rotary knob 6, a fixed contact point board 8 arranged to be opposed to the movable board 7 in a direction of the axis line X, movable contact points 77, 78 abutting on a one face 81a of a base portion 81 in the fixed contact point board 8 in the direction of the axis line X, and a movable contact point 79 abutting on the other face 81b of the fixed contact point board 8 in the direction of the axis line X. The movable contact points 77, 78 and the movable contact point 79 are supported by the movable board 7 to cause, when the rotary knob 6 is operated to rotate, the movable contact points 77, 78 and the movable contact point 79 to slide simultaneously on the one face 81a and on the other face 81b of the base portion 81 in the fixed contact point board 8.

## Description

### BACKGROUND OF THE INVENTION

### Field of the Invention

The present invention relates to a lever device for a vehicle.

### Description of the Related Art

An operating lever in a lever device for a vehicle is provided with a knob that is operated upon driving in-vehicle devices and the like (for example, Japanese Patent No. 4695310)

In recent years, functions allotted to one knob have been increasing in association with an increase in the number of the in-vehicle devices as control targets and complication in the control method.

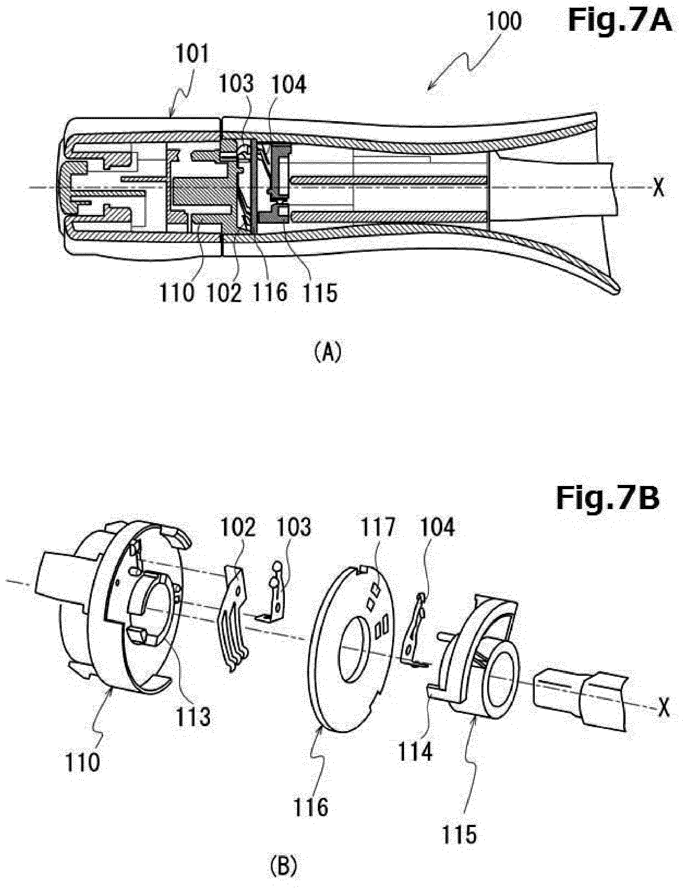

Figs. 7A and 7B are drawings explaining a lever device 100 according to a conventional example, where Fig. 7A is a cross sectional view illustrating the lever device 100, and Fig. 7B is an exploded perspective view illustrating constituting elements (movable contact points 102, 103, 104, movable boards 110, 115 and a fixed contact board 116) in a rotary knob 101.

For example, in a case of the lever device 100 according to the conventional example illustrated in Figs. 7A and 7B, three different functions are allotted to the single rotary knob 101 of a rotary type.

In this lever device 100, the movable board 110 supporting the two movable contact points 102, 103 and the movable board 115 supporting the one movable contact point 104 are arranged to be opposed to each other on a common axis line X.

The fixed contact point board 116 is positioned between the movable boards 110, 115, and fixed contact points 117 are exposed on opposing faces of the fixed contact point board 116 to the movable boards 110, 115.

The movable board 110 and the movable board 115 are connected to be integrally rotatable through connecting portions 113, 114 provided on opposing faces of each other. In addition, the movable board 110 is connected to the rotary knob 101 to be integrally rotatable therewith.

Therefore when the rotary knob 101 is rotated around the axis line X, the movable board 110 and the movable board 115 are rotated integrally around the axis line X in association with the rotation of the rotary knob 101.

When the rotary knob 101 is rotated around the axis line X, the two movable contact points 102, 103 supported by the movable board 110 and the one movable contact point 104 supported by the movable board 115 slide on surfaces of the fixed contact point board 116.

In addition, a contact combination of the movable contact points 102, 103, 104 and the fixed contact points 117 changes with an angular position of the rotary knob 101 around the axis line X.

The lever device 100 outputs a different signal depending upon the contact combination of the movable contact points 102, 103, 104 and the fixed contact points 117. As a result, a specified function determined in response to the signal is accomplished in a side of the in-vehicle device having received the signal.

### SUMMARY OF THE INVENTION

In this way, when both the faces of the fixed contact point board in a direction of the axis line X are used to respond to an increase in the number of the functions allotted to the single knob, it is necessary to arrange the movable boards on both sides of the fixed contact point board in the direction of the axis line X, leading to an operating lever to be large-sized in the direction of the axis line X.

Therefore there is a demand for a lever device which is configured to respond to an increase in the number of the functions to be allotted to one knob and the entirety of which includes an operating lever is not large-sized.

The present invention is made in view of the foregoing problems, and an object of the present invention is to provide a lever device which is configured to respond to an increase in the number of the functions to be allotted to one knob and not to be large-sized as a whole.

According to the present invention, a lever device comprises:
a movable board which is arranged in the inside of an operating lever provided with a knob a rotational operation of which around an axis line is made possible and which rotates around the axis line in association with the rotational operation of the knob;
a fixed contact point which is arranged to be opposed to the movable board in a direction of the axis line;
a one-side movable contact point abutting on one face of the fixed contact point board in the direction of the axis line; and
an other-side movable contact point abutting on the other face of the fixed contact point board in the direction of the axis line, wherein
the one-side movable contact point and the other-side movable contact point are configured to be supported by the movable board to cause, when the knob is operated to rotate, the one-side movable contact point and the other-side movable contact point to slide simultaneously on the one face and on the other face of the fixed contact point board.

According to the present invention, since the movable contact point sliding on the one face of the fixed contact point board in the direction of the axis line and the movable contact point sliding on the other face are supported by the common movable board, it is not necessary to arrange the movable boards respectively on both sides of the fixed contact point board.

Therefore since one of the two movable boards required in the conventional lever device can be omitted, it is possible to decrease a size of the operating lever in the direction of the axis line X by an amount corresponding to the omitted movable board.

Accordingly the lever device can be configured to respond to an increase in the number of the functions to be allotted to one knob and the entirety of the lever device including the operating lever can be suppressed from being large-sized.

### BRIEF DESCRIPTION OF THE DRAWINGS

Other objects, features, and advantages of the present invention will become more apparent from the following detailed description made with reference to the accompanying drawings, in which like parts are designated by like reference numbers and in which:
Fig. 1 is a cross sectional view illustrating a lever device according to an embodiment in the present invention;
Fig. 2 is an exploded perspective view illustrating an essential part of the lever device according to the embodiment in the present invention;
Fig. 3 is a plan view illustrating a movable board according to the embodiment in the present invention;
Fig. 4A is a cross sectional view illustrating an essential part of an operating lever taking along line A - A in Fig. 3;
Fig. 4B is a cross sectional view illustrating an essential part of the operating lever taking along line B - B in Fig. 3;
Fig. 5 is a cross sectional view illustrating an essential part of the operating lever taking along line A - A in Fig. 4B;
Fig. 6 is a cross sectional view illustrating an essential part of the operating lever taking along line B - B in Fig. 4B;
Fig. 7A is a cross sectional view illustrating a lever device according to a conventional example; and
FIG. 7B is an exploded perspective view illustrating an essential part of the lever device according to the conventional example.

### DESCRIPTION OF THE PREFERRED EMBODIMENTS

Hereinafter, a lever device according to an embodiment in the present invention will be explained with reference to the accompanying drawings.

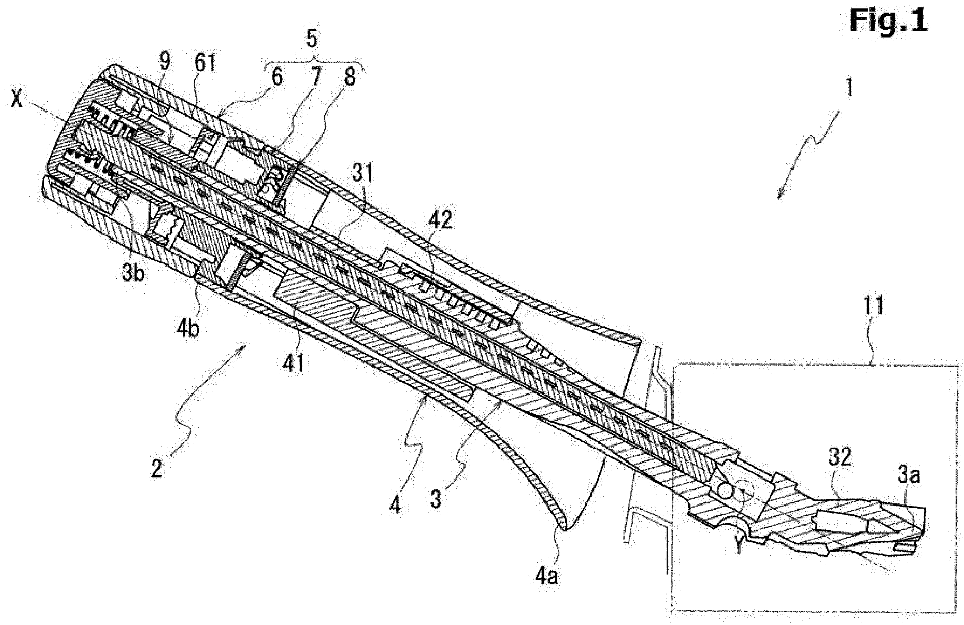

Fig. 1 is a drawing explaining a lever device 1, and is a cross sectional view illustrating the lever device 1 by cutting away an operating lever 2 along an operating member 3.

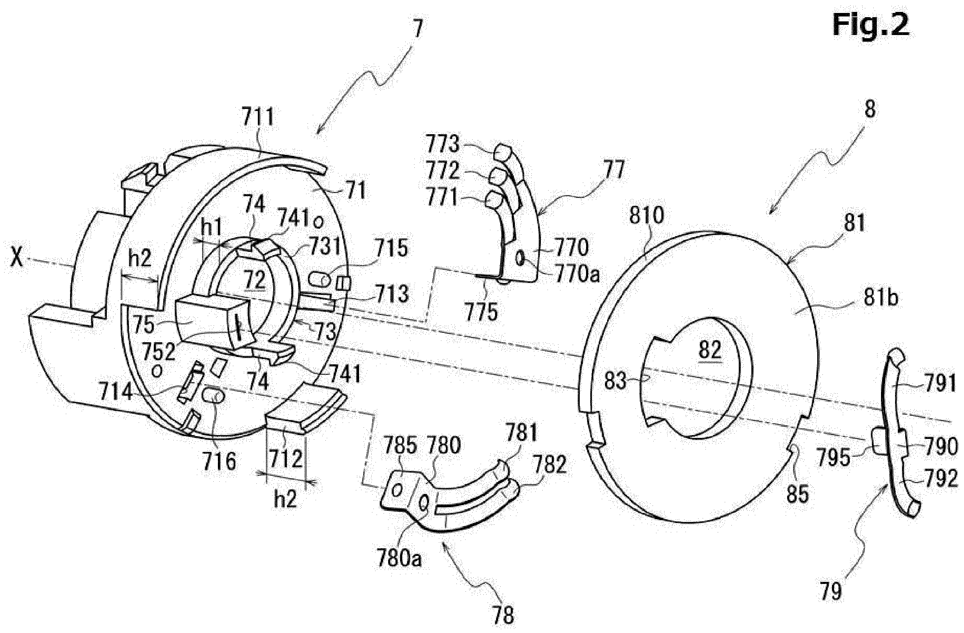

Fig.2 is an exploded perspective view illustrating constituting elements (movable board 7, fixed contact point 8, movable contact points 77, 78, 79) of a rotary switch 5 provided in the operating lever 2. It should be noted that in Fig. 2, illustration of a fixed contact point 84 exposed on a surface of a base portion 81 of the fixed contact point board 8 is omitted.

The lever device 1 is provided with the operating lever 2 to be operated by a user.

The operating lever 2 is provided with a tubular cover portion 4, and a tubular shaft portion 31 of the operating member 3 penetrates through the inside of the cover portion 4 from one end 4a to the other end 4b of the cover portion 4.

A tubular connecting portion 41 is provided in the inside of the cover portion 4, and a fitting arm 42 of the connecting portion 41 is fitted on an outer periphery of the shaft portion 31 penetrating through the connecting portion 41. Accordingly, the cover portion 4 and the operating member 3 are integrally connected.

The operating member 3 is provided with a connecting portion 32 to an unillustrated switch operating element in one end 3a-side in a longitudinal direction.

The operating member 3 is configured to cause the one end 3a-side provided with the connecting portion 32 to project from the one end 4a of the cover portion 4, and the one end 3a-side of the operating member 3 is supported to be rotatable around an axis line Y in the inside of a casing 11 provided with a polar board (unillustrated).

The operating member 3 is configured such that the other end 3b in the longitudinal direction projects from the other end 4b of the cover portion 4, and a click block 9 disposed within a rotary knob 6 is inserted on the other end 3b of the operating member 3.

In the other end 3b-side of the operating member 3, the movable board 7 of the rotary switch 5 as well is inserted on the shaft portion 31, and the movable board 7 is supported to be rotatable in a position neighbored to the click block 9 in the shaft portion 31.

The rotary switch 5 is provided with the rotary knob 6, the movable board 7 and the fixed contact point board 8.

The rotary knob 6 is provided to be rotatable around a center axis (axis line X) of the operating member 3, and is connected to the movable board 7 in an inner diameter side of a cylindrical gripping portion 61.

Therefore when the rotary knob 6 rotates around the axis line X, the movable board 7 rotates around the axis line X integrally with the rotary knob 6.

The movable board 7 is arranged to be opposed to the fixed contact point board 8 in a direction of the axis line X, and the fixed contact point board 8 is supported in the inside of the cover portion 4 in a rotation-stopping state.

As illustrated in Fig. 2, the movable board 7 is provided with a support wall portion 71 which is arranged in a direction perpendicular to the axis line X, and the movable contact points 77, 78 are provided on an opposing face of the support wall portion 71 to the fixed contact point board 8.

A through hole 72 through which the operating member 3 penetrates in the direction of the axis line X is provided in the central part of the support wall portion 71, and the support wall portion 71 is formed in a ring shape as viewed in the direction of the axis line X.

An annular wall 73 surrounding the through hole 72 is provided on an opposing face in the support wall portion 71 to the fixed contact point board 8, and the annular wall 73 surrounds a peripheral edge of the through hole 72 over an entire circumference in a peripheral direction around the axis line X.

The annular wall 73 is provided to extend from the support wall portion 71 to the fixed contact point board 8-side, and is formed in a height h1 in the same direction of the axis line X over the entire circumference in the peripheral direction around the axis line X.

A tip 731 of the annular wall 73 is provided with engaging arms 74 extending to the fixed contact point board 8-side on an extension line of the annular wall 73.

As viewed in the direction of the axis line X, the engaging arms 74 include two engaging arms which are provided by predetermined intervals in the peripheral direction around the axis line X.

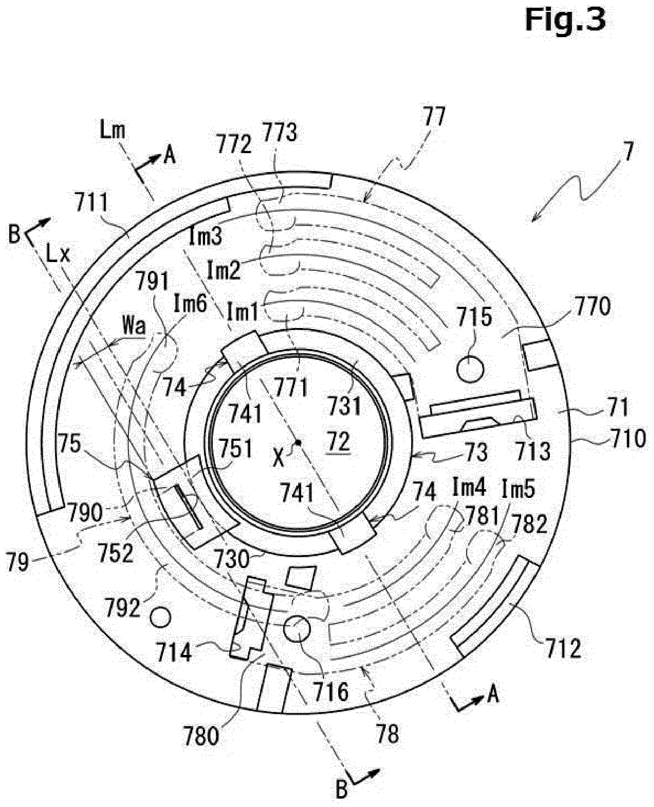

Fig. 3 is a drawing explaining the movable board 7, and is a plan view illustrating the movable board 7 as viewed from the fixed contact point board 8-side. It should be noted that in Fig. 3, the movable contact points 77, 78, 79 in the movable board 7 are illustrated in virtual lines for explaining an arrangement of the movable contact points 77, 78,79.

In the present embodiment, the engaging arms 74 extending from the annular wall 73 are positioned on a diameter line Lm (refer to Fig. 3) of the annular wall 73 as viewed in the direction of the axis line X.

Engagement stoppers 741 are disposed respectively on tip sides of the engaging arms 74 to project outside in a radial direction of the axis line X, and as viewed in the direction of the axis line X the engagement stoppers 741 project to the radial outside of the annular wall 73.

The support wall portion 71 provided with the annular wall 73 in the center is provided with abutting walls 711, 712 extending to the fixed contact point board 8-side in an outer peripheral edge 710-side. The abutting walls 711, 712 are provided along the outer peripheral edge 710 of the support wall portion 71, and are formed in an arc shape as viewed in the direction of the axis line X.

The abutting walls 711, 712 each are formed in the same height h2 (refer to Fig. 2) from the support wall portion 71.

Slits 713, 714 are provided in an outer diameter side of the annular wall 73 on the opposing face of the support wall portion 71 to the fixed contact point board 8 to extend linearly in a radial direction.

In the present embodiment, an insert element 775 (refer to Fig. 2) extending from a base portion 770 of the movable contact point 77 is inserted in the slit 713 on one side. An insert element 785 (refer to Fig. 2) extending from a base portion 780 of the movable contact point 78 is inserted in the slit 714 on the other side.

Therefore the movable contact points 77, 78, in which the insert elements 775, 785 are inserted in the slits 713, 714, are provided on the opposing face of the support wall portion 71 to the fixed contact point board 8.

As illustrated in Fig. 2, the movable contact point 77 is provided with a through hole 770a in a substantially central part of the base portion 770, and a projection 715 projecting from the support wall portion 71 is engaged to the through hole 770a.

As illustrated in Fig. 3, resilient arm portions 771, 772, 773 are provided on one side of the base portion 770 in the peripheral direction around the axis line X, and as viewed in the direction of the axis line X the resilient arm portions 771, 772, 773 are respectively formed in an arc shape along virtual circles Im1, Im2, Im3 surrounding the axis line X.

In the present embodiment, the movable contact point 77 is configured such that the insert element 775 inserted in the slit 713 and the projection 715 engaged to the through hole 770a restrict the tip sides of the resilient arm portions 771, 772, 773 from being displaced in the radical direction of the axis line X.

As illustrated in Fig. 2, the movable contact point 78 is provided with a through hole 780a in a substantially central part of the base portion 780, and a projection 716 projecting from the support wall portion 71 is engaged to the through hole 780a.

As illustrated in Fig. 3, resilient arm portions 781, 782, are provided on one side of the base portion 780 in the peripheral direction around the axis line X, and the resilient arm portions 781, 782 are respectively formed in an arc shape along virtual circles Im4, Im5 surrounding the axis line X.

In the present embodiment, the movable contact point 78 is configured such that the insert element 785 inserted in the slit 714 and the projection 716 engaged to the through hole 780a restrict the tip sides of the resilient arm portions 781, 782 from being displaced in the radical direction of the axis line X.

As illustrated in Fig. 3, as viewed in the direction of the axis line X, the resilient arm portions 771, 772, 773 and the tip sides of the resilient arm portions 781, 782 of the movable contact points 77, 78 are positioned on one side across the diameter line Lm of the annular wall 73 on the opposing face of the support wall portion 71 to the fixed contact point board 8.

As viewed from the fixed contact point board 8-side, the movable contact point 77 and the movable contact point 78 are provided in such a direction that the resilient arm portions 771, 772, 773 and the resilient arm portions 781, 782 extend in a counterclockwise direction at the center of the axis line X from the base portions 770, 780.

In addition, the support member 75 of the movable contact point 79 is provided on the opposite side to a region where the resilient arm portions 771, 772, 773 and the resilient arm portions 781, 782 are positioned across the diameter line Lm.

As viewed in the direction of the axis line X, the support member 75 is provided to be in contact with an outer periphery 730 of the annular wall 73.

The support member 75 is formed to be radially thicker by a thickness Wa than the annular wall 73, and the support member 75 extends to the fixed contact point board 8-side along the axis line X in a state of maintaining the thickness Wa.

A tip face 751 of the support member 75 is formed as a flat face perpendicular to the axis line X, and the tip face 751 is arranged in a position farther from the support wall portion 71 than the engagement stopper 741 of the above-mentioned engaging arm 74.

As illustrated in Fig. 3, a slit 752 is formed on the tip face 751. As viewed in the direction of the axis line X the slit 752 is formed in a straight line along a tangential line Lx intersecting with the outer periphery of the annular wall 73.

As illustrated in Fig. 2, an insert element 795 extending from a base portion 790 of the movable contact point 79 is inserted in the slit 752 in the direction of the axis line X.

As viewed in the direction of the axis line X, resilient arm portions 791, 792 extending in a direction of being away from the base portion 790 are provided on one side and on the other side of the base portion 790 in the peripheral direction around the axis line X. The resilient arm portions 791, 792 are formed in an arc shape along a virtual circle Im6 at the center of the axis line X.

The resilient arm portions 791, 792 are positioned on an outer diameter side of the above-mentioned annular wall 73, and the tip sides of the resilient arm portions 791, 792 are configured to be capable of displacing in the direction of the axis line X. The tip sides of the resilient arm portions 791, 792, upon assembling the movable board 7 and the fixed contact point board 8, abut in the direction of the axis line X on a face 81 b of a base portion 81 in the fixed contact point board 8 at the opposite side to the movable board 7.

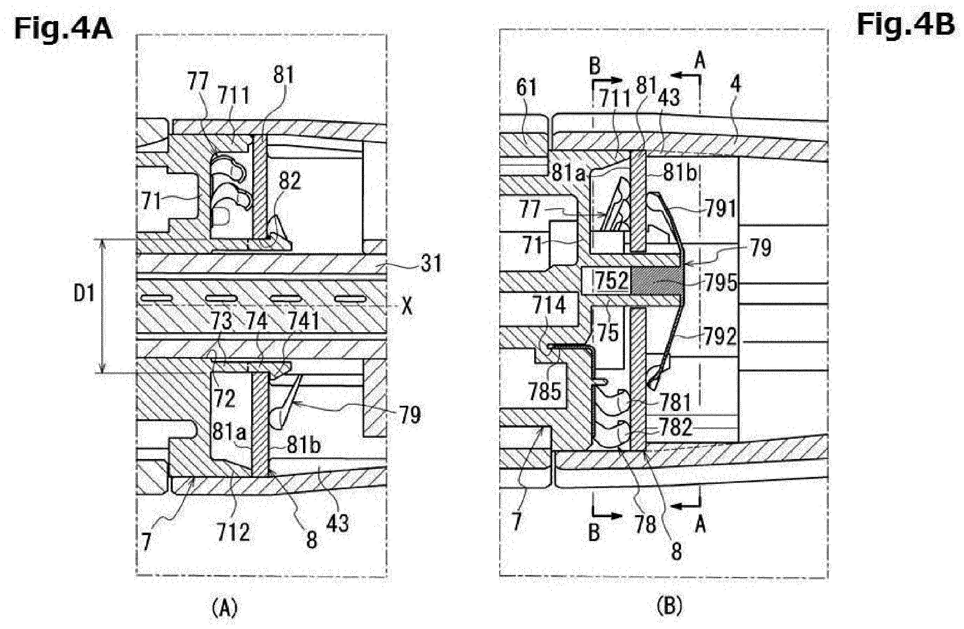

Figs. 4A and 4B are cross sectional views illustrating an essential part of the operating lever 2, wherein Fig. 4A is a cross sectional view illustrating an essential part of the operating lever 2 by cutting the operating lever 2 along line A - A in Fig. 3 and Fig. 4B is a cross sectional view illustrating an essential part of the operating lever 2 by cutting the operating lever 2 along line B - B in Fig. 3.

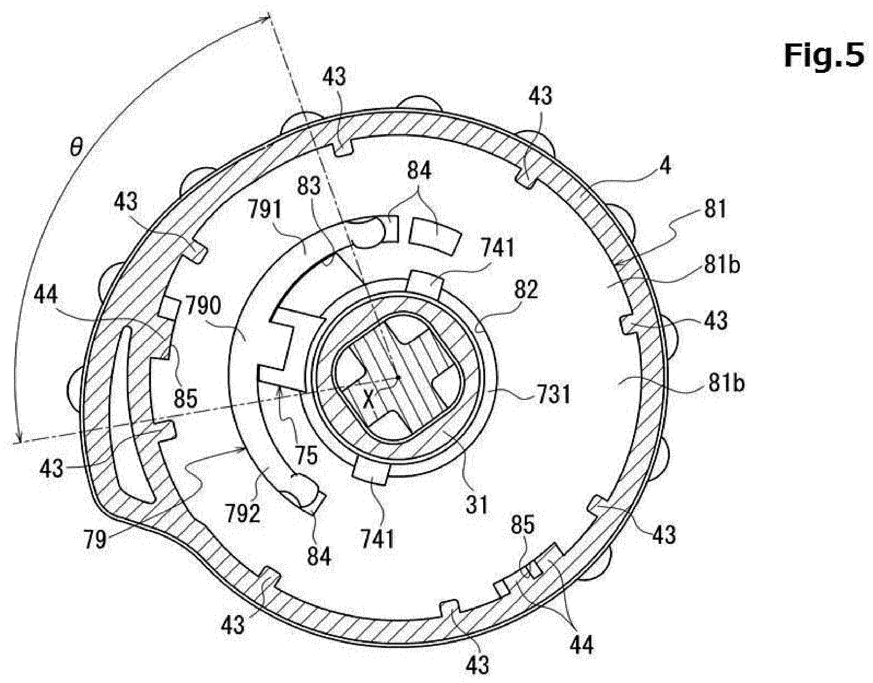

Fig. 5 is a cross sectional view illustrating an essential part of the operating lever 2 by cutting the operating lever 2 along line A - A in Fig. 4B.

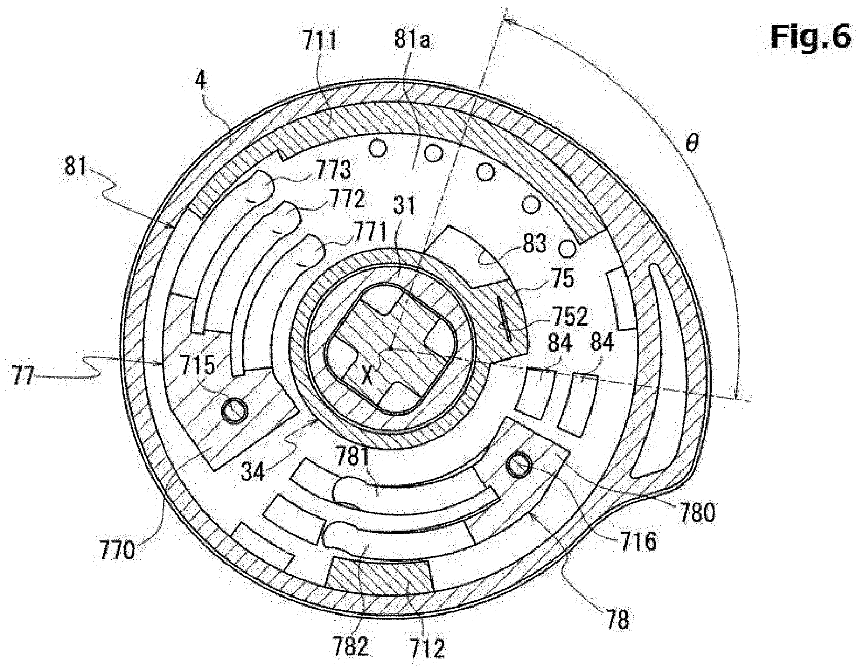

Fig. 6 is a cross sectional view illustrating an essential part of the operating lever 2 by cutting the operating lever 2 along line B - B in Fig. 4B.

The fixed contact point board 8 is provided with the base portion 81 formed in a ring shape as viewed in the direction of the axis line X, and fixed contact points 84 are exposed on one face 81 a and the other face 81 b of the base portion 81 in the direction of the axis line X (refer to Fig. 5 and Fig. 6).

As illustrated in Fig. 4A, a through hole 82 penetrating through the base portion 81 in the direction of the axis line X is formed in the central part of the base portion 81, and the through hole 82 is formed in an inner diameter D1 matching an outer diameter of the above-mentioned annular wall 73.

Further, as viewed in the direction of the axis line X, a notch hole 83 (insert hole) is provided in a position neighbored to the through hole 82 in the base portion 81 for avoiding interference with the support member 75 extending from the above-mentioned movable board 7 (refer to Fig. 2).

As viewed in the direction of the axis line X, the notch hole 83 is in communication with the through hole 82 from a radial outside.

The notch hole 83 is formed in a predetermined angular range θ (refer to Fig. 5 and Fig. 6) in the peripheral direction around the axis line X, and is formed in an arc shape as viewed in the direction of the axis line X.

In the present embodiment, when the movable board 7 rotates around the axis line X in association with an operation of the rotary knob 6, a position of the support member 75 displaces in the peripheral direction around the axis line X as viewed in the direction of the axis line X.

Therefore the angular range θ of the notch hole 83 in the peripheral direction around the axis line X is set in an angular range where the support member 75 does not interfere with the base portion 81 of the fixed contact point board 8 at the rotation operation of the rotary knob 6.

Here, an explanation will be made of an assembly of the movable board 7 and the fixed contact point board 8.

The movable board 7 and the fixed contact point board 8 will be assembled in the following order.
(a) The movable contact points 77, 78 are attached on
   the movable board 7.
(b) The engaging arms 74 extending from the movable
   board 7 are inserted in the through hole 82 of the base portion 81 in the fixed contact point board 8, and the support member 75 extending from the movable board 7 is inserted in the notch hole 83.
(c) The engagement stoppers 741 provided in the tip
   sides of the engaging arms 74 are engaged to the face 81 b of the base portion 81 at the opposite side to the movable board 7 (refer to Fig. 4A).
(d) The movable contact point 79 is attached to the
   support member 75, which projects to the other side (the opposite side to the movable board 7) of the base portion 81 through the notch hole 83 of the fixed contact point board 8, in the direction of the axis line X.

When the movable board 7 and the fixed contact point board 8 are assembled in this order, the abutting walls 711, 712 of the movable board 7 become in a state of abutting on the one face 81 a (face on the movable board 7-side) in the base portion 81 of the fixed contact point board 8 in the direction of the axis line X (refer to Figs. 4A and 4B).

Further, the movable contact points 77, 78 abut on the one face 81 a in the base portion 81, and the movable contact point 79 abuts on the other face 81 b in the base portion 81.

In a state where the movable board 7 and the fixed contact point board 8 are assembled with each other, the movable board 7 and the fixed contact point board 8 are inserted in the tubular shaft portion 31 projecting from the other end 4b of the cover portion 4 to be inserted into the inside of the cover portion 4.

At this time, the movable board 7 and the fixed contact point board 8 are inserted into the inside of the cover portion 4 until the other face 81 b in the base portion 81 of the fixed contact point board 8 abuts on ribs 43 projecting from an inner periphery of the cover portion 4.

As illustrated in Fig. 5, the plurality of ribs 43 are provided on the inner periphery of the cover portion 4 by predetermined intervals in the peripheral direction of the around the axis line X, and the ribs 43 abut on the outer peripheral side of the other face 81 b of the base portion 81.

Further, rotation-stopping projections 44 are provided on the inner periphery of the cover portion 4, and the projections 44 are radially engaged to notches 85 provided on the outer periphery of the base portion 81.

In addition, the abutting walls 711, 712 of the movable board 7 abut on the one face 81 a of the base portion 81.

Accordingly the fixed contact point board 8 inserted in the inside of the cover portion 4 is positioned in the direction of the axis line X by the ribs 43 and the abutting walls 711, 712 in a state where rotation of the fixed contact point board 8 around the axis line X is restricted by the projections 44 and the notches 85.

Hereinafter, an explanation will be made of an operation of the rotary switch 5 in a case where the rotary knob 6 in the lever device 1 is operated.

When the rotary knob 6 rotates around the axis line X by the rotational operation of the gripping portion 61 (refer to Fig. 1) around the axis line X, the movable board 7 rotates around the axis line X in association with the rotation of the rotary knob 6.

Then, the movable contact points 77, 78 provided in the support wall portion 71 of the movable board 7 and the movable contact point 79 provided in the support member 75 of the movable board 7 simultaneously rotates around the axis line X.

As described above, the movable contact points 77, 78 abut on the one face 81 a in the base portion 81 of the fixed contact point board 8, and the movable contact point 79 abuts on the other face 81 b.

Here, the movable contact points 77, 78 and the movable contact point 79 are supported by the same movable board 7.

The notch hole 83 for avoiding the interference with the support member 75 displacing in the peripheral direction around the axis line X is formed in the base portion 81 of the fixed contact point board 8.

Accordingly, the movable contact points 77, 78 and the movable contact point 79 each simultaneously slide on the one face 81 a and the other face 81 b of the base portion 81 in association with the rotation of the rotary knob 6 around the axis line X.

Accordingly, the lever device 1 outputs a different signal in response to a contact combination of the movable contact points 77, 78, the movable contact point 79 and the fixed contact points 84. Therefore a specific function determined in response to the signal is achieved in the in-vehicle device side having received the signal.

As described above, in the present embodiment,
(1) a lever device comprises:
   the movable board 7 which is arranged in the inside
      of the operating lever 2 provided with the rotary knob 6 (knob) a rotational operation of which around an axis line X is made possible and which rotates around the axis line X in association with the rotational operation of the rotary knob 6;
   the fixed contact point board 8 which is arranged to
      be opposed to the movable board 7 in a direction of the axis line X;
   the movable contact points 77, 78 (one-side movable
      contact points) abutting on the one face 81 a of the base portion 81 in the fixed contact point board 8 in the direction of the axis line X; and
   the movable contact point 79 (other-side movable
      contact point) abutting on the other face 81 b of the fixed contact point board 8 in the direction of the axis line X, wherein
   the movable contact points 77, 78 and the movable
      contact point 79 are configured to be supported by the movable board 7 to cause, when the rotary knob 6 is operated to rotate, the movable contact points 77, 78 and the movable
      contact point 79 to slide simultaneously on the one face 81 a and on the other face 81 b of the base portion 81 in the fixed contact point board 8.
   According to the above configuration, since the movable contact points 77, 78 sliding on the one face 81 a of the base portion 81 in the fixed contact point board 8 and the movable contact point 79 sliding on the other face 81 b in the direction of the axis line X are supported by the common movable board 7, it is not necessary to arrange the movable board supporting the movable contact points 77, 78 and the movable board supporting the movable contact point 79 on both sides of the fixed contact point board 8.
   Therefore since one of the two movable boards required in the conventional lever device can be omitted, it is possible to decrease a size of the operating lever 2 in the direction of the axis line X by an amount corresponding to the omitted movable board.
   Accordingly the lever device can respond to an increase in the number of the functions allotted to one rotary knob and the entirety of the lever device including the operating lever can be configured not to be large-sized.
(2) The movable board 7 includes:
   the support wall portion 71 on the opposing face of which to the fixed contact point board 8 the movable contact points 77, 78 are provided; and
   the support member 75 which extends from the support wall portion 71 to the fixed contact point board 8-side and on the tip face 751 (tip) of which the movable contact point 79 is attached, and
   the fixed contact point board 8 includes:
      the ring-shaped base portion 81 the fixed contact point 84 of which is exposed on the one face 81 a and the other face 81 b in the direction of the axis line X; and
      the notch hole 83 (insert hole) which is formed to penetrate through the base portion 81 in the direction of the axis line x and into which the support member 75 is inserted in the direction of the axis line X, wherein the notch hole 83 is formed in an arc shape along the peripheral direction around the axis line X as viewed in the direction of the axis line X.
   With this configuration, by setting the angular range θ of the notch hole 83 in the peripheral direction around the axis line X to the angular range for avoiding the interference with the support member 75 displacing in the peripheral direction around the axis line X, it is possible to displace the movable contact point 79 supported by the support member 75 together with the movable contact points 77, 78 around the axis line X.
   Particularly the movable contact points 77, 78 and the movable contact point 79 each can simultaneously slide on the one face 81 a and the other face 81 b of the base portion 81 in association with the rotation of the rotary knob 6 around the axis line X.
   Accordingly the lever device 1 can appropriately output a different signal in response to a contact combination of the movable contact points 77, 78, 79 and the fixed contact point 84 to appropriately achieve a specific function determined in response to the signal in the in-vehicle device side having received the signal.
(3) The support wall portion 71 of the movable board 7 includes:
   the through hole 72 through which the shaft portion 31 (support shaft) arranged along the axis line X penetrates in the direction of the axis line X;
   the annular wall 73 which surrounds the through hole 72 and extends from the support wall portion 71 to the fixed contact point 8-side;
   the engaging arms 74 surrounding the through hole 72,and extending on an extension line of the annular wall 73 from a tip 731 of the annular wall 73; and
   the engagement stoppers 741 projecting from the engaging arms 74 to the radial outside of the axis line X,
   the base portion 81 of the fixed contact point board 8 includes:
      the through hole 82 through which the shaft portion 31 (support shaft) penetrates in the direction of the axis line X and which is formed in the inner diameter D1 (refer to Fig. 4A) matching the outer diameter of the annular wall 73, and
      the engaging arms 74 penetrate through the through hole 82 of the base portion 81 from the one side to the other side in the direction of the axis line X to cause the engagement stoppers 741 to be engaged to the other face 81 b of the base portion 81.
   With this configuration, the displacement of the movable board 7 and the fixed contact point board 8 in the direction (direction of the axis line X) of being away from each other is restricted by the engaging arms 74 causing the engagement stoppers 741 to be engaged to the other side face 81 b of the base portion 81.
   Therefore when the rotary knob 6 is operated to rotate around the axis line X, the movable contact points 77, 78 and the movable contact point 79 can be rotated around the axis line X in a state of making pressure-contact with the one face 81 a and the other face 81 b of the base portion 81 in the fixed contact point board 8.
(4) As viewed in the direction of the axis line X, the support member 75 is provided to be in contact with the outer periphery of the annular wall 73, and as viewed in the direction of the axis line X, the notch hole 83 is formed to be integral with the through hole 82 of the base portion 81.
   This configuration can increase the support strength of the support member 75 to prevent the inclination of the support member 75 to the axis line X. As a result, it is possible to prevent the inclination of the movable contact point 79 attached on the tip of the support member 75 to the axis line X to cause the resilient arm portions 791, 792 of the movable contact point 79 to be in pressure-contact with the other face 81 b of the base portion 81 by equal resilient forces.
   In addition, by integrally providing the through hole 82 and the notch hole 83 to contact with each other, it is possible to suppress an area of the through holes (through hole 82 and notch hole 83) penetrating in the direction of the axis line X in the base portion 81 of the fixed contact point board 8 to a minimum. Therefore it is possible to ensure the region of providing the fixed contact points 84 in the base portion 81 and to appropriately suppress a reduction in strength of the base portion 81.
(5) As viewed in the direction of the axis line X, the support wall portion 71 has the abutting walls 711, 712 abutting in the direction of the axis line X on the outer diameter side of the one side face 81 a of the base portion 81 in the fixed contact point board 8,
   as viewed in the direction of the axis line X, the ribs 43 abutting in the direction of the axis line X on the outer diameter side of the other side face 81 b of the base portion 81 and the projections 44 engaging radially to the notch 85 on the outer periphery of the base portion 81 are provided on the inner periphery of the tubular cover portion 4 of the operating lever 2, and
   in the inside of the operating lever 2, the base portion 81 of the fixed contact point board 8 is positioned in the direction of the axis line X in a state of being gripped between the abutting walls 711, 712 and the ribs 43, and the rotation thereof around the axis line x is restricted by the projections 44 engaged to the notch 85 on the outer periphery of the base portion 81,
   With this configuration, the fixed contact point board 8 is arranged in the inside of the operating lever 2 in a state where the displacement thereof around the axis line X and the rotation thereof around the axis line X are restricted.
   As a result, when the rotary knob 6 is operated to rotate, the contact combination of the movable contact points 77, 78, 79 and the fixed contact points 84 is appropriately switched in response to the angular position of the rotary knob 6 around the axis line X. Therefore it is possible to output an appropriate signal in accordance with the contact combination.
(6) As viewed in the direction of the axis line X, the movable contact point 79 includes:
   a base portion 790 (attaching portion) attached on the tip face 751 of the support member 75; and
   a resilient arm portion 791 extending to one side in the peripheral direction around the axis line X and a resilient arm portion 792 extending to the other side from the base portion 790, and
   as viewed in the direction of the axis line X, the one-side resilient arm portion 791 and the other-side resilient arm portion 792 are formed in an arc shape along a virtual circle Im6 surrounding the axis line X by a predetermined interval, and are provided to be symmetric about the base portion 790.
   With this configuration, in any of a case where the support member 75 supporting the movable contact point 79 rotates to one side in the peripheral direction around the axis line X and a case where the support member 75 rotates to the other side, sliding resistances between the other face 81 b of the base portion 81 and the resilient arm portions 791, 792 of the movable contact point 79 can be made substantially equal.
   With this configuration, at the time the movable contact point 79 displaces in the peripheral direction around the axis line X in association with the rotational operation of the rotary knob 6, it is possible to cause the resilient arm portions 791, 792 resiliently abutting on the other face 81 b of the base portion 81 to smoothly slide without sticking.
(7) As viewed in the direction of the axis line X, the resilient arm portions 771, 772, 773, 781, 782 of the movable contact points 77, 78 are arranged on one side across the diameter line Lm of the base portion 81 passing through the axis line X, and the resilient arm portions 791, 792 of the movable contact point 79 are arranged on the other side.

With this configuration, resilient forces acting on the one face 81 a of the base portion 81 from the resilient arm portions 771, 772, 773, 781, 782 of the movable contact points 77, 78 and resilient forces acting on the other face 81 b of the base portion 81 from the resilient arm portions 791, 792 of the movable contact point 79 can be dispersed in the peripheral direction around the axis line X.

When the resilient force to act on the base portion 81 disproportionately acts on a partial region in the peripheral direction around the axis line X, it possibly becomes a resistance to the rotation of the movable board 7, but it is possible to appropriately prevent occurrence of the above event by dispersing the resilient force in the peripheral direction around the axis line X.

The present embodiment has exemplified a case where the two movable contact points 77, 78 are arranged on the one side of the base portion 81 in the fixed contact point portion 8 and the one movable contact point 79 is arranged on the other side.

The total number of the movable contact points is not limited to the present embodiment, but can be changed as needed.

While only the selected embodiment has been chosen to illustrate the present invention, it will be apparent to those skilled in the art from this disclosure that various changes and modifications can be made therein without departing from the scope of the invention as defined in the appended claims. Furthermore, the foregoing description of the embodiment according to the present invention is provided for illustration only, and not for the purpose of limiting the invention as defined by the appended claims and their equivalents.

### Description of Reference Signs

1 LEVER DEVICE
2 OPERATING LEVER
3 OPERATING MEMBER
31 SHAFT PORTION
32 CONNECTING PORTION
4 COVER PORTION
41 CONNECTING PORTION
42 FITTING ARM
43 RIB
44 PROJECTION
5 ROTARY SWITCH
6 ROTARY KNOB (KNOB)
61 GRIPPING PORTION
7 MOVABLE BOARD
71 SUPPORT WALL PORTION
710 OUTER PERIPHERAL EDGE
711, 712 ABUTTING WALL
713, 714 SLIT
715, 716 PROJECTION
72 THROUGH HOLE
73 ANNULAR WALL
74 ENGAGING ARM
741 ENGAGEMENT STOPPER
75 SUPPORT MEMBER
751 TIP FACE
752 SLIT
77, 78 MOVABLE CONTACT POINT (ONE-SIDE MOVABLE CONTACT POINT)
79 MOVABLE CONTACT POINT (OTHER-SIDE MOVABLE CONTACT POINT)
770, 780, 790 BASE PORTION (ATTACHING PORTION)
771, 772, 773, 781, 782, 791, 792 RESILIENT ARM PORTION
775, 785, 795 INSERT ELEMENT
8 FIXED CONTACT POINT BOARD
81 BASE PORTION
81 a ONE FACE
81b OTHER FACE
82 THROUGH HOLE
83 NOTCH HOLE (INSERT HOLE)
84 FIXED CONTACT POINT
9 CLICK BLOCK
11 CASING
D1 INNER DIAMETER
Im1 to Im 6 VIRTUAL CIRCLE
Lm DIAMETER LINE
Lx TANGENT LINE
X AXIS LINE
Y AXIS LINE

## Claims

1. A lever device for a vehicle comprising:
a movable board (7) which is arranged in the inside of an operating lever (2) provided with a knob (6) a rotational operation of which around an axis line (X) is made possible and which rotates around the axis line (X) in association with the rotational operation of the knob (6);
a fixed contact point board (8) which is arranged to be opposed to the movable board (7) in a direction of the axis line (X);
a one-side movable contact point (77, 78) abutting on one face (81 a) of the fixed contact point board (8) in the direction of the axis line (X); and
an other-side movable contact point (79) abutting on the other face (81 b) of the fixed contact point board (8) in the direction of the axis line, wherein
the one-side movable contact point (77, 78) and the other-side movable contact point (79) are configured to be supported by the movable board (7) to cause, when the knob (6) is operated to rotate, the one-side movable contact point (77, 78) and the other-side movable contact point (79) to slide simultaneously on the one face (81a) and on the other face (81 b) of the fixed contact point board (8).

2. The lever device for the vehicle according to claim
1, wherein
the movable board (7) includes:
a support wall portion (71) on an opposing face of which to the fixed contact point board (8) the one-side movable contact point (77, 78) is provided; and
a support member (75) which extends from the support wall portion (71) to the fixed contact point side and on a tip of which the other-side movable contact point (79) is attached, and
the fixed contact point board (8) includes:
a base portion (81) a fixed contact point of which is exposed on the one face (81 a) and the other face (81 b) in the direction of the axis line (X); and
an insert hole (83) which is formed to penetrate through the base portion in the direction of the axis line (X) and into which the support member (75) is inserted in the direction of the axis line, wherein
the insert hole (83) is formed in an arc shape along the peripheral direction around the axis line (X) as viewed in the direction of the axis line.

3. The lever device for the vehicle according to claim 2, wherein
the support wall portion (71) of the movable board (7) includes:
a through hole (72) through which a support shaft (31) arranged along the axis line (X) penetrates in the direction of the axis line;
an annular wall (73) which surrounds the through hole (72) and extends from the support wall portion (71) to the fixed contact point side;
an engaging arm (74) extending on an extension line of the annular wall (73) from the tip of the annular wall; and
an engagement stopper (741) projecting from the engaging arm (74) in a radial direction of the axis line (X), and
the base portion (81) of the fixed contact point board (8) includes:
a through hole (82) through which the support shaft (31) penetrates in the direction of the axis line (X) and which is formed in an inner diameter matching an outer diameter of the annular wall (73), and
the engaging arm (74) penetrates through the through hole (82) of the base portion from one side to the other side to cause the engagement stopper (741) to be engaged to the other face of the base portion.

4. The lever device for the vehicle according to claim 3, wherein
the support member (75) is provided to be in contact with an outer periphery of the annular wall (73) as viewed in the direction of the axis line (X), and
the insert hole (83) is formed to be integral with the through hole (82) of the base portion (81) as viewed in the direction of the axis line.

5. The lever device for the vehicle according to claim 3 or 4, wherein
the support wall portion (71) is provided with an abutting wall (711, 712) on an opposing face of the support wall portion to the fixed contact point board (8), the abutting wall (711, 712) abutting on an outer diameter side of the one side face of the base portion (81) in the direction of the axis line,
a tubular cover portion (4) of the operating lever(2) includes a rib (43) abutting in the direction of the axis line (X) on an outer diameter side of the other side face of the base portion (81), and
the fixed contact point board (8) is provided in the inside of the operating lever (2) in a state where the base portion (81) is gripped between the abutting wall (711, 712) and the rib (43).

6. The lever device for the vehicle according to any of claims 2 to 5, wherein
as viewed in the direction of the axis line (X), the other-side movable contact point (79) includes:
an attaching portion (790) attached on the tip face (751) of the support member (75); and
a resilient arm portion (791) extending to one side in the peripheral direction around the axis line and a resilient arm portion (792) extending to the other side, and
as viewed in the direction of the axis line (X), the one-side resilient arm portion (791) and the other-side resilient arm portion (792) are formed in an arc shape along a virtual circle (Im6) surrounding the axis line (X) by a predetermined interval and are provided to be symmetric about the attaching portion (790).

7. The lever device for the vehicle according to any of claims 2 to 6, wherein
as viewed in the direction of the axis line, the other-side movable contact point (79) and the one-side movable contact point (77, 78) are arranged on one side and the other side across a diameter line (Lm) of the base portion (81) passing through the axis line (X).
